# EUROPEAN PATENT APPLICATION

(11) **EP 1 128 347 A1**
(43) Date of publication of application: **29.08.2001**
(21) Application number: 00650011.0
(22) Date of filing: 23.02.2000
(51) Int. Cl.: G07G 5/00

(54) **A hand-held payment card terminal**

(71) Applicant: TRINTECH LIMITED, Dublin 18 (IE)
(72) Inventor: Loughlin, Kevin Patrick, Ashbourne, County Meath (IE); Madden, Denis Colman, Blackrock, County Dublin (IE); Martin, Michael Joseph, Leopardstown, Dublin 18 (IE); Brophy, Laurence Gerard, Churchtown, Dublin 14 (IE)
(74) Representative: O'Connor, Donal Henry

(57) **Abstract**

A payment card terminal (1) having a printer (40) mounted in a casing (3,4). The printer (4) has a spring-loaded printing head (41). A paper roller (53) is carried by a support member (30) on spaced-apart arms (5). A lever arm (32) is pivotally mounted on the support member to engage the printer (40) to pivot the support member upwards and hence the roller (53) out of engagement with the printing head (41). This allows paper to be replaced easily. There is also provided a construction of key pad and key guard (15).

## Description

The present invention relates to a hand-held payment card terminal comprising a casing, a keypad, a display screen, and a printer mounted therein, the printer having a print head spring-biased against a paper roller for the support of paper therebetween.

In this specification the term "payment card" is used to encompass not alone what is considered generally as being a credit card, but also debit cards and any other issued cards which can be used by consumers, or corporate purchasers, for the payment for goods and services and a "payment card transaction" as used in this specification refers to the use of any such payment card in a transaction.

It is well known to provide terminals for such payment cards which terminals are generally desk-top fixtures that are used for example at the check-outs of supermarkets or in retail and other establishments. However, such terminals are not generally portable and therefore cannot be used by people delivering goods, providing services, or indeed collecting money on other people's premises. There is a long felt need for a hand-held terminal that will be efficient in use and will facilitate payment card transactions irrespective of location.

One of the major problems experienced with hand-held terminals is the difficulty in arranging the printers and in particular changing of paper in printers which can be a time-consuming and difficult task. Also difficulty has been experienced in providing a printer that will be efficient in use. One of the major problems being the necessity to ensure that there is adequate contact between the roller and the print head.

The present invention is directed towards overcoming the problems inherent in present constructions of payment card terminals and in particular to a construction of hand-held payment card terminals.

### Statements of Invention

According to the invention there is provided a hand-held payment card terminal comprising: a casing, a keypad, a display screen, and a printer mounted therein, the printer having a print head spring-biased against a paper roller for the support of paper therebetween characterised in that the roller is mounted on a separate support member pivotal on the casing at a support pivot position remote from the print head and in which a lever arm is pivotally mounted on the support member between the roller and the support pivot position to engage the terminal to pivot the support member to disengage the roller and the print head. This allows for the easy replacement of paper and by providing such an arrangement the actual printer and roller are tightly secured together, while at the same time they can be easily disengaged.

Ideally the support member forms a cover for the printer and paper containing cavity in the terminal. This is a particularly suitable construction.

Further the lever arm preferably engages the printer and this has the advantage of ensuring that if the printer has any in its mounting in the casing this will not affect the disengagement.

In one embodiment of the invention the lever arm comprises a cover plate for the support member and a pair of spaced-apart arms projecting into the cavity.

Preferably the support member is mounted by pivot pins on the casing, the pivot pins being mounted in holes which allow limited movement of the support member towards and away from the print head. The advantage of this is that it allows the support member to be snapped easily into the casing, particularly when the support member is manufactured from a plastics material.

Preferably the roller includes a pair of end stub axles and the support member carries the roller on a pair of spaced-apart arms having open roller stub axle receiving slots.
The advantage of this is that the slots will allow the roller to move relatively to the spaced apart arms as the roller is disengaged from the print head. This is necessary to avoid the roller jamming against the print head.

Ideally the print head is positioned above the roller and exerts a downward pressure on the roller into the slots. By positioning the print head in this way there is always a downward positive pressure exerted by the print head on the roller which will tend to maintain the support member within the casing thus providing a suitably rigid structure.

Further the invention provides a terminal comprising:
a keypad including a base support (8) and a key assembly having a matrix of keys (9) in rows and columns on the base support (8) which is mounted below an outer casing (3) in an open-mouthed box (10), said out casing (3) having a plurality of holes (11) through which the keys (9) project; and
a key guard (15) of channel shape comprising an upstanding back (16) and two upstanding side walls (17) encompassing three sides of the matrix of keys (9), the walls having downwardly projecting lugs (18) for engaging through holes in the casing (3) to connect with the open-mouthed box (10).

The advantage of this construction is that the relatively delicate key assembly is well protected and further the use of the key guard ensures that privacy is provided to the users.

### Detailed Description of the Invention

The invention will be more clearly understood from the following description of an embodiment thereof, given by way of example only described with reference to the accompanying drawings in which:
Fig. 1 is a plan view of a hand-held terminal sitting on a charging device;
Fig. 2 is a side view of the terminal and charging device of Fig. 1;
Fig. 3 is an exploded view on a reduced scale;
Fig. 4 is a sectional view only of the terminal;

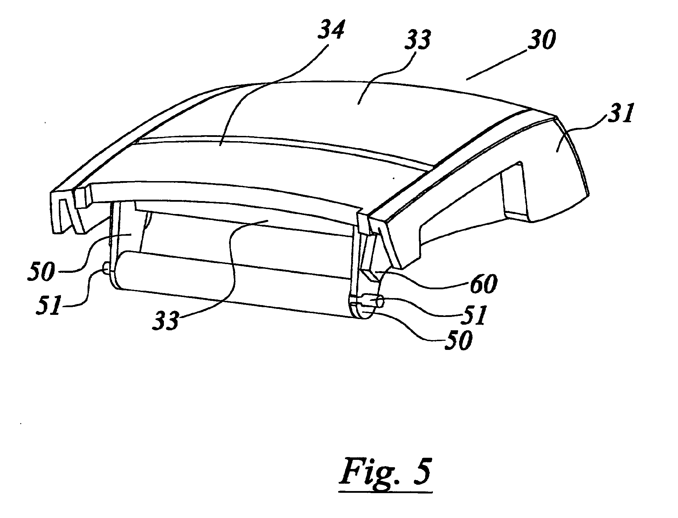

Fig. 5 is a perspective view of a support member forming part of the terminal;

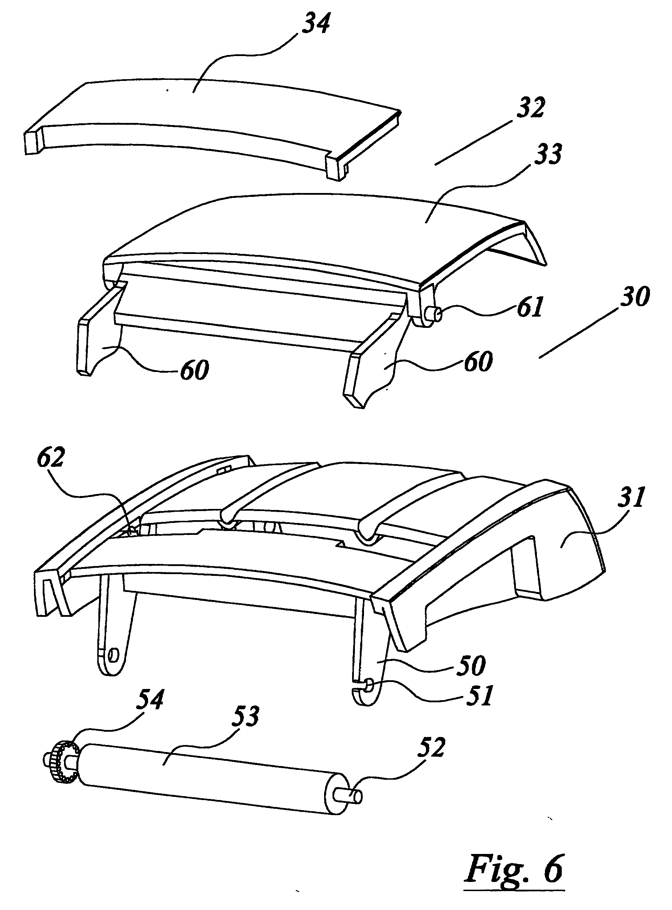

Fig. 6 is an exploded view of the support member mounting a roller;

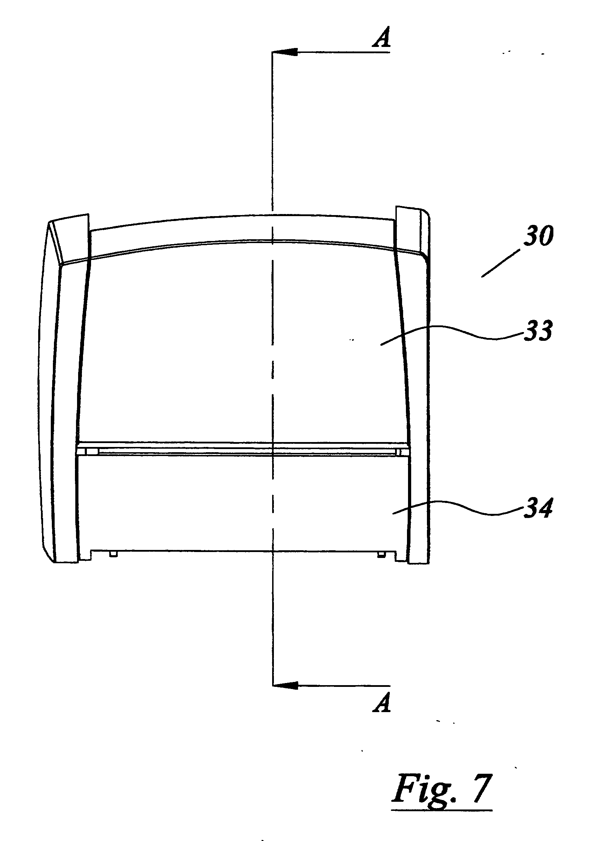

Fig. 7 is an enlarged plan view of the support member illustrated in Fig. 4;

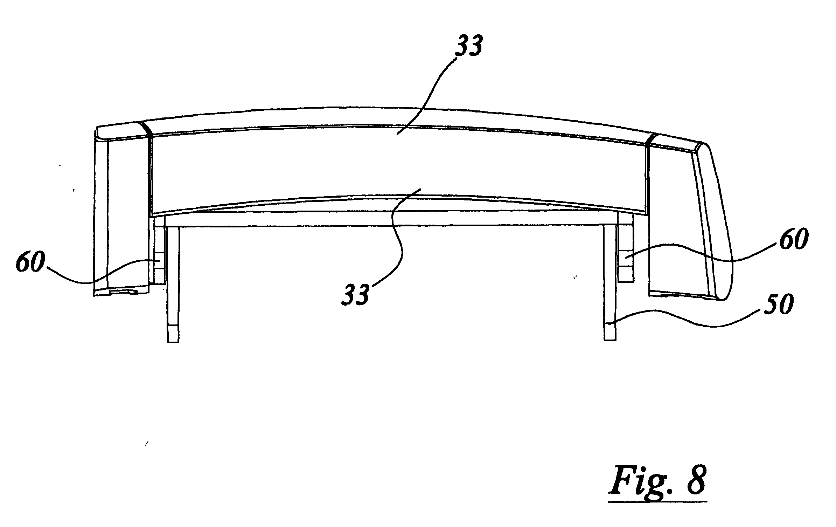

Fig. 8 is a rear view of the support member;

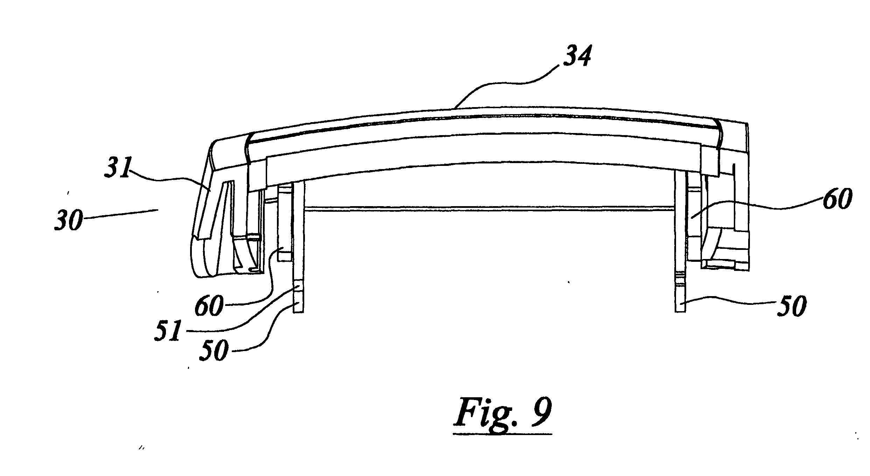

Fig. 9 is a front view of the support member;

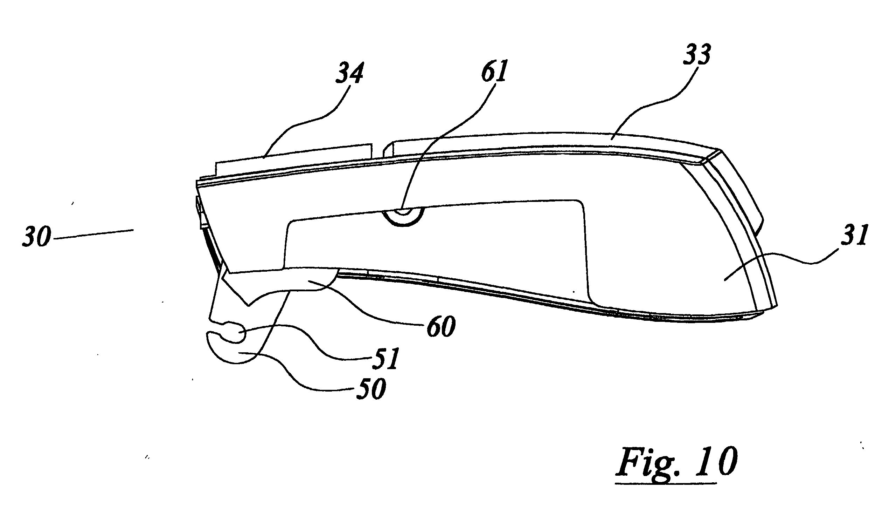

Fig. 10 is a right-hand side view;

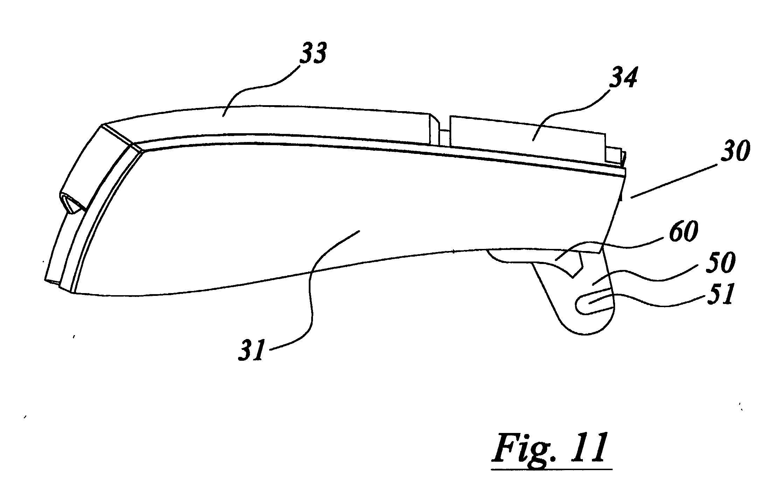

Fig. 11 is a left-hand side view;
Fig. 12 is a sectional view along the lines A-A of Fig. 7 with sectional lines omitted for clarity;
Fig. 13 is a plan view of the terminal with the support member of Fig. 4 removed; and
Figs. 14(a), (b) and (c) are diagrammatic views showing operation of the support.

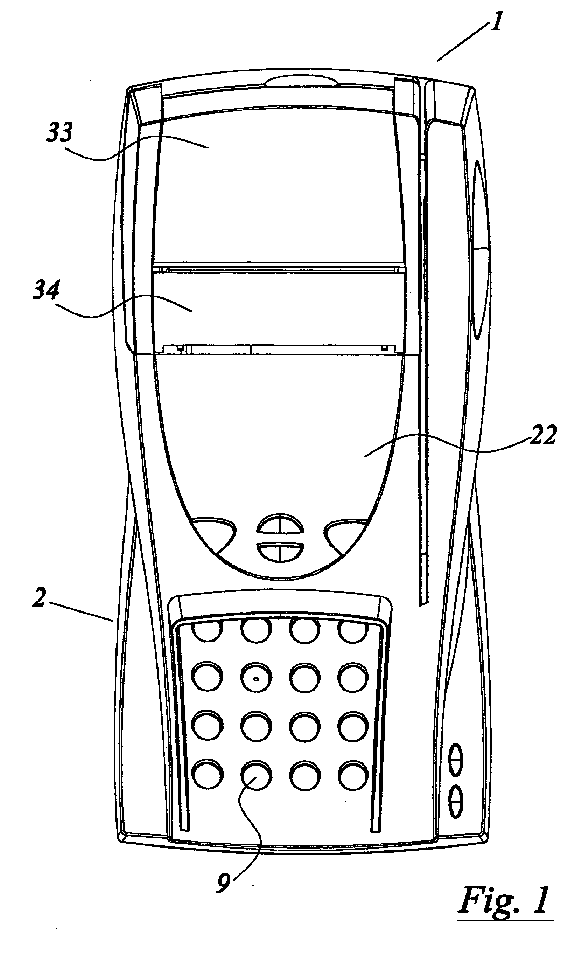

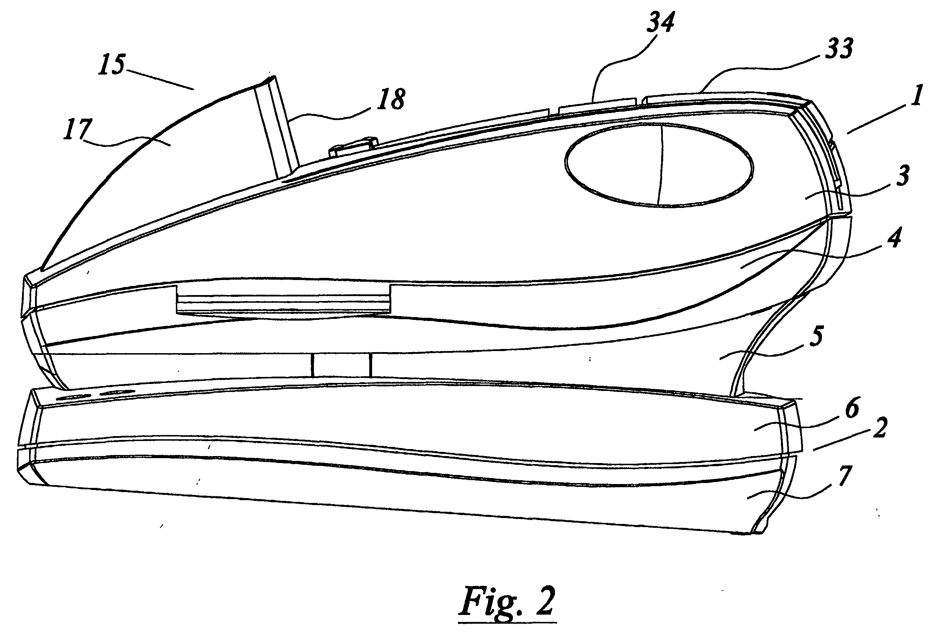

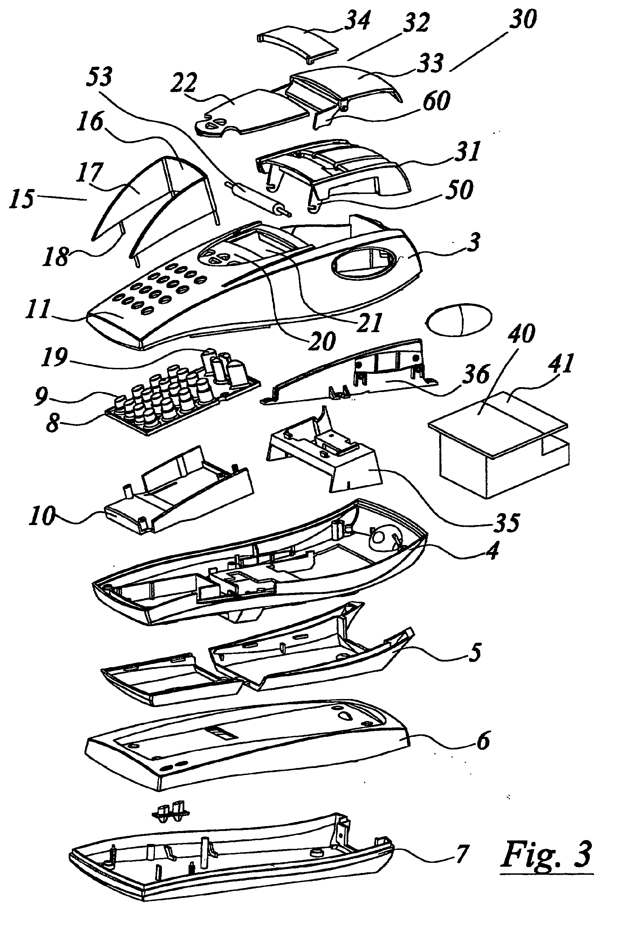

Referring to Figs. 1 to 3, the casing and all the components of the hand-held terminal and its base station or charger are illustrated, except for the printer and paper roller and some circuit boards. Briefly there is provided a hand-held terminal indicated generally by the reference numeral 1 seated on top of a charger indicated generally by the reference numeral 2. Referring specifically to Fig. 3, the hand-held terminal 1 comprises a main upper casing 3 and a main lower casing 4 and a subcasing 5 mounted above the charger 2, which comprises a charger top casing 6 and charger bottom casing 7. There is mounted in the enclosure formed between the main upper casing 3 and the lower casing 4 a keypad comprising a base support 8 and an array of keys 9 in rows and columns as well as additional keys described below mounted in an open-mouthed box 10. The main upper casing 3 which forms the outer casing of the terminal has a plurality of holes 11 through which the keys 9 project.

There is provided a key guard indicated generally by the reference numeral 15 of channel-shape having an upstanding back wall 16 and upstanding side walls 17. These encompass the sides of the matrix of keys 9. The walls 17 have downwardly projecting pins or lugs 18 for engagement with the open-mouthed box 10. The base support 8 carries further keys 19 which project through further holes 20 in the main upper casing 3. A display screen is mounted at 21 and is covered by a transparent cover sheet 22.

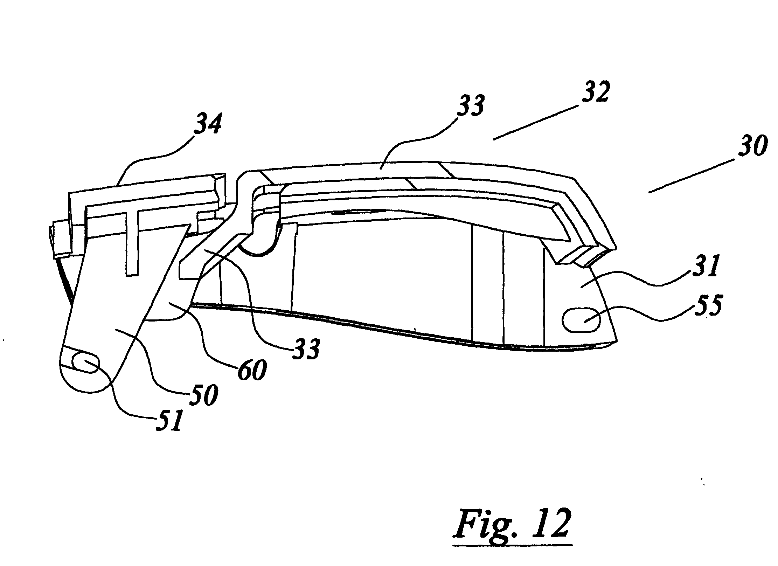

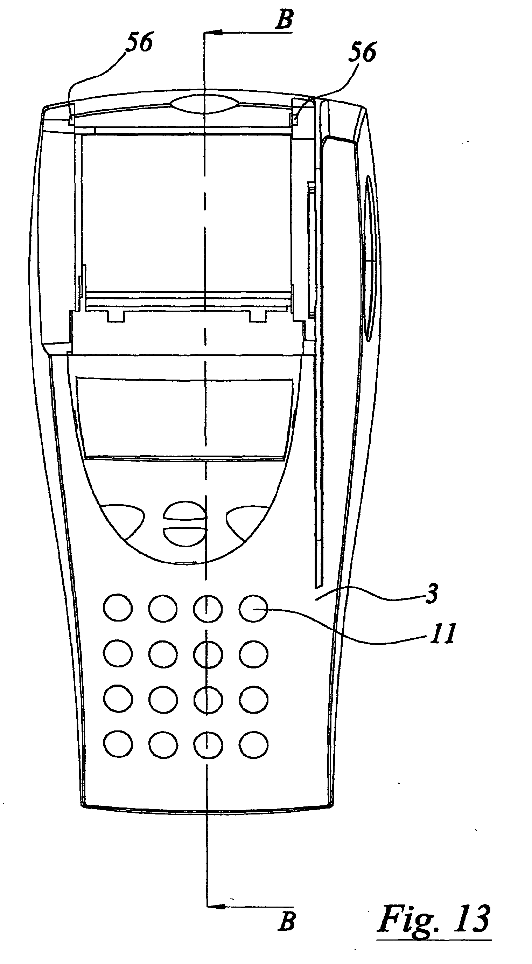

There is provided a support member indicated generally by the reference numeral 30. The support member 30 comprises a base cover 31 which carries a lever arm indicated generally by the reference numeral 32. The base cover 31 mounts a pair of spaced-apart arms 50 having stub axle receiving slots 51 for receiving stub axles 52 of a roller 53, one of the stub axles 52 carries a drive gear 54 for the paper feed and is driven off a printer 40. The support member 30 carries elongate holes 55 in its base cover 31 which engage within pivot axles 56, see Figs. 12 and 13 to form a support pivot position.

The lever arm 32 comprises a cover plate 33 extending into a pair of spaced apart actuator arms 60. The cover plate 32 has pivot stub axles 61 for engagement in holes 62 in the base cover 31. A snap-on in-fill cover 34 is also provided. Illustrated also is a printer support 35 and side plates 36 for a printer 40.

The printer 40 is a conventional printer the spring-loaded printing head 41 of which, not shown in detail, engages against the roller 53 and sandwiches paper 57 therebetween. A suitable cavity 58 in the terminal stores the paper 57 in a loose roll i.e. not on a spindle and is covered by the base cover 31.

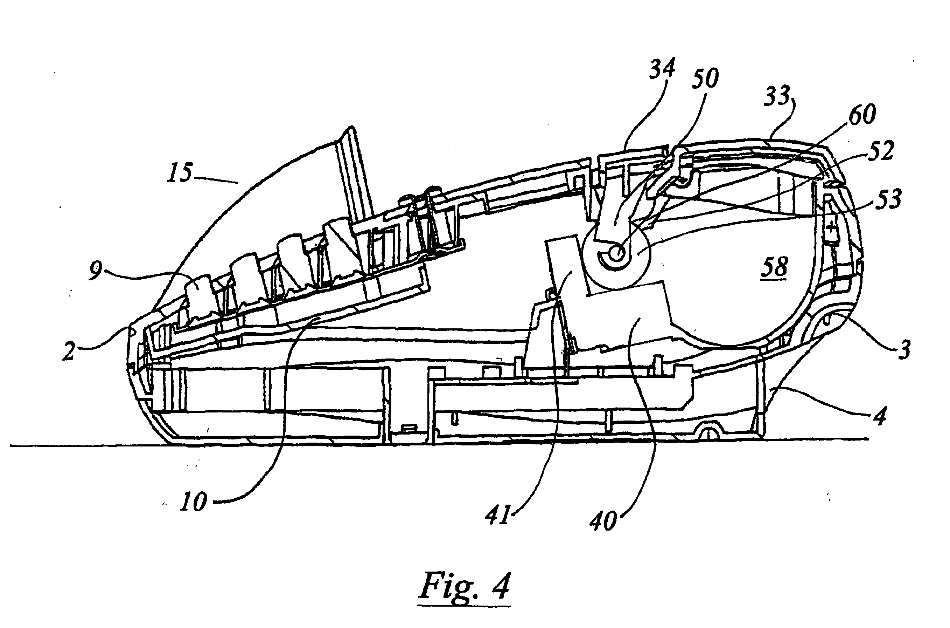

Referring to Fig. 4 it will be noted that the print head 41 is effectively positioned above the roller 53 as its point of contact with it is above the centre line of the roller.

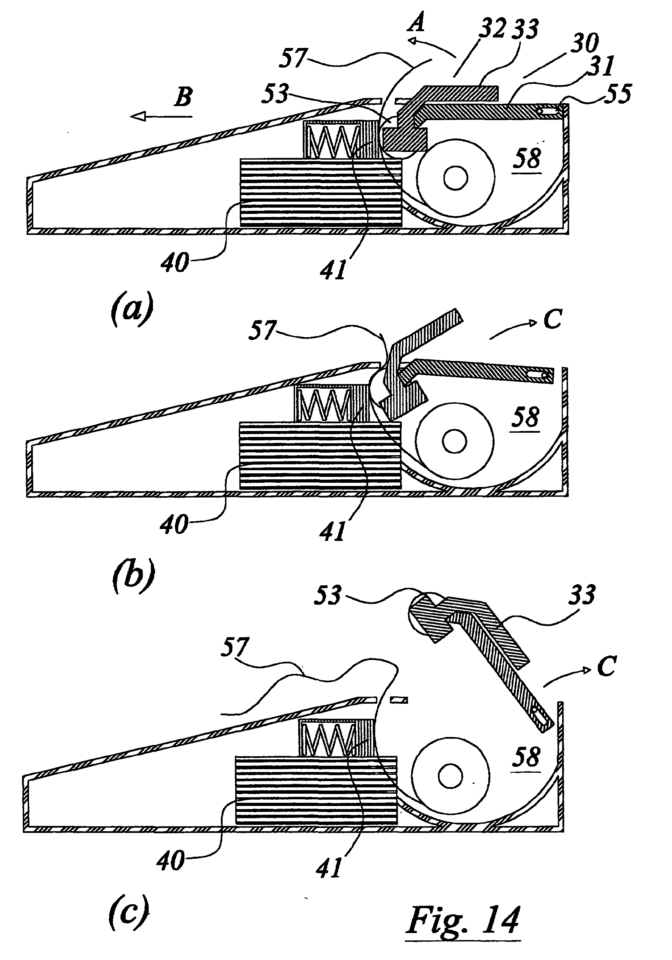

In use and referring specifically to Figs. 14(a) to (c) if the cover plate 33 is pivoted upwards in the direction of the arrow A the arms 60 engage the printer 40 which is effectively engaging with the terminal and causes the support member 30 i.e. its base cover 31 to initially move forwards in the elongate holes 55 towards the printer 40 i.e. in the direction of the arrow B (Fig. 14(a)) and then on further movement of the cover plate 33 in the direction of the arrow A to cause the support member 30 to start pivoting upwards in the direction of the arrow C and thus bringing the roller 53 upwards and forwards in the stub axle receiving slots 51 and then out of engagement with the printer head 41. Then the support member 30 can be freely pivoted out of the way to allow access into the cavity 58.

It will be appreciated that if the elongate holes 55 were long enough there would be no need to provide open-mouth slots for supporting the roller, but sufficient movement could be provided to disengage the roller from the print head and to pivot it out of the way.

Similarly, while the support member has been shown mounted on pivot pins it will be appreciated that all that is required is a sufficiently secure mounting to retain the support member in use and to allow it be pivoted out of the way.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail.

## Claims

1. A hand-held payment card terminal (1) comprising: a casing (3,4), a keypad (8,9), a display screen (21), and a printer (40) mounted therein, the printer (40) having a print head (41) spring-biased against a paper roller (53) for the support of paper (57) therebetween characterised in that the roller (53) is mounted on a separate support member (30) pivotal on the casing (3,4) at a support pivot position remote from the print head (41) and in which a lever arm (32) is pivotally mounted (61) on the support member (30) between the roller (53) and the support pivot position to engage the terminal to pivot the support member (30) to disengage the roller (53) and the print head (41).

2. A terminal (1) as claimed in claim 1 in which the support member (30) forms a cover for the printer 40 and paper containing cavity (58) in the terminal (1).

3. A terminal (1) as claimed in claim 1 or 2 in which the lever arm (32) engages against the printer (40).

4. A terminal (1) as claimed in claim 2 or 3 in which the lever arm(32) comprises a cover plate (33) for the support member (30) and a pair of spaced-apart arms (60) projecting into the cavity (58).

5. A terminal (1) as claimed in any preceding claim in which the support member (30) is mounted by pivot pins (61) on the casing (3,4), the pivot pins (61) being mounted in holes (62) which allow limited movement of the support member (30) towards and away from the print head (41).

6. A terminal (1) as claimed in any preceding claim in which the roller (53) includes a pair of end stub axles (52) and the support member (30) carries the roller (53) on a pair of spaced-apart arms (50) having open roller stub axle receiving slots (51).

7. A terminal (1) as claimed in claim 6 in which the print head (41) is positioned above the roller (53) and exerts a downward pressure on the roller (53) into the slots (51).

8. A terminal (1) as claimed in any preceding claim comprising:
a keypad including a base support (8) and a key assembly having a matrix of keys (9) in rows and columns on the base support (8) which is mounted below an outer casing (3) in an open-mouthed box (10), said out casing (3) having a plurality of holes (11) through which the keys (9) project; and
a key guard (15) of channel shape comprising an upstanding back (16) and two upstanding side walls (17) encompassing three sides of the matrix of keys (9), the walls having downwardly projecting lugs (18) for engaging through holes in the casing (3) to connect with the open-mouthed box (10).
